# EUROPÄISCHE PATENTSCHRIFT

(11) **EP 0 955 530 B1**
(45) Veröffentlichungstag und Bekanntmachung des Hinweises auf die Patenterteilung: **18.08.2004**
(21) Anmeldenummer: 99107600.1
(22) Anmeldetag: 16.04.1999
(51) Int. Cl.: G01G 21/24, G01G 23/01

(54) **Waage mit einem Ankopplungsbereich für ein Kalibriergewicht**
Weighing device comprising a coupling part for a calibrating weight
Balance avec une zone de couplage pour un poids de calibrage

(30) Priorität: 08.05.1998 DE 19820637
(43) Veröffentlichungstag der Anmeldung: 10.11.1999
(73) Patentinhaber: Mettler-Toledo GmbH, 8606 Greifensee (CH)
(72) Erfinder: Burkhard,Hans-Rudolf, 8492 Wila (CH); Schneider,Ferdinand, Winterthur (CH)

(56) Entgegenhaltungen:
- DE-A- 3 639 521
- DE-A- 19 605 087
- DE-U- 29 509 829

## Beschreibung

Die Erfindung bezieht sich auf eine Waage mit einem zur Einleitung der Gewichtskraft einer zu wiegenden Last dienenden Lastaufnehmer, der von zwei in einem Abstand parallel zueinander sich erstreckenden Lenkern, deren jeder an einem Ende mit dem Lastaufnehmer und an einem dazu entgegengesetzten anderen Ende mit einem feststehenden Teil der Waage verbunden ist, an dem feststehenden Teil der Waage in der Ebene eines durch die vier Enden der Lenker bestimmten Parallelogramms parallel auslenkbar geführt ist, mit einem zur Umwandlung der Gewichtskraft in ein elektrisches Meßsignal dienenden Kraftwandler, und mit einem einen ersten und einen zweiten Hebel sowie einen zur lösbaren Verbindung mit einem Kalibriergewicht dienenden Ankopplungsbereich aufweisenden, zur Übertragung der Gewichtskraft von dem Lastaufnehmer zu dem Kraftwandler dienenden Hebelwerk, dessen erster Hebel einen sich von einer an einem zum feststehenden Teil weisenden Bereich des Lastaufnehmers ausgebildeten, zur kräftemäßigen Verbindung mit dem Lastaufnehmer dienenden Ankopplungsstelle zu einer an einem zum Lastaufnehmer weisenden Bereich des feststehenden Teils ausgebildeten, als Hebeldrehpunkt dienenden ersten Abstützstelle erstreckenden eingangsseitigen Hebelarm sowie einen ausgangsseitigen Hebelarm aufweist, und dessen zweiter Hebel an einer als Hebeldrehpunkt dienenden zweiten Abstützstelle gelagert und mit dem ausgangsseitigen Hebelarm des ersten Hebels kräftemäßig gekoppelt ist.

Bei einer derartigen bekannten Waage (DE 196 05 087 A1), deren Hebelwerk insgesamt drei jeweils zur Untersetzung der in den Lastaufnehmer eingeleiteten Gewichtskraft dienende Hebel aufweist, ist der zur Verbindung mit dem Kalibriergewicht dienende Ankopplungsbereich an einem mit dem zweiten Hebel gekoppelten Hebelarm des dem zweiten Hebel nachgeschalteten dritten Hebels angeordnet. Einer an diesem Ankopplungsbereich eingeleiteten kleinen Kalibrierkraft entspricht daher eine in den Lastaufnehmer eingeleitete Gewichtskraft, die ein durch die Übersetzungsverhältnisse des Hebelwerks bestimmtes Vielfaches der an dem Ankopplungsbereich eingeleiteten Kalibrierkraft beträgt. Somit läßt sich durch diese Anordnung des Ankopplungsbereichs mit einem wünschenswert kleinen Kalibriergewicht eine verhältnismäßig hohe Gewichtskrafteinleitung in den Lastaufnehmer simulieren. Insbesondere ist es möglich, mit einem Kalibriergewicht, das nur einem kleinen Bruchteil der Vollast der Waage entspricht, eine Kalibrierung wie unter Vollast ausführen.

Bei dieser Vollastsimulation können jedoch Übersetzungsfehler nicht auskalibriert werden, die an denjenigen Hebeln des Hebelwerks auftreten, welche dem mit dem Ankopplungsbereich versehenen Hebel vorgeschaltet sind. Im Verlauf der Lebensdauer einer Waage können derartige Übersetzungsfehler leicht auftreten, weil die dem ersten Hebel nachgeschalteten Hebel durch sehr empfindliche, dünne Biegelager abgestützt und miteinander gekoppelt sind, die durch auf die Waage einwirkende Schläge Verformungen erleiden können.

Der Erfindung liegt die Aufgabe zugrunde, eine Waage der eingangs genannten Art derart auszubilden, daß mit einem nur einem Bruchteil der Vollast der Waage entsprechenden Kalibriergewicht eine von Übersetzungsfehlern des Hebelwerks unverfälschte Vollastkalibrierung ausgeführt werden kann, bei der die Gefahr einer Beeinflussung durch fremdeinwirkungsbedingte Übersetzungsfehler weitgehend vermieden wird.

Erfindungsgemäß wird diese Aufgabe dadurch gelöst, daß der eingangsseitige Hebelarm des ersten Hebels eine Verlängerung aufweist, die sich über die Ankopplungsstelle hinaus bis in den an die dem feststehenden Teil abgewandte Seite des Lastaufnehmers angrenzenden Raum hinein erstreckt und dort mit dem Ankopplungsbereich für das Kalibriergewicht versehen ist.

Bei der erfindungsgemäßen Lösung wirkt das Kalibriergewicht über die Verlängerung unmittelbar auf den eingangsseitigen Hebelarm des ersten Hebels ein. Etwaige Übersetzungsfehler, die in den dem eingangsseitigen Hebelarm des ersten Hebels nachgeschalteten Teilen des Hebelwerks auftreten und beispielsweise durch stoßeinwirkungsbedingte Verformungen der Ankopplungs- und Abstützstellen der Hebel hervorgerufen sind, werden dabei auskalibriert. Durch eine entsprechend lange Bemessung der sich über die den Lastaufnehmer und den eingangsseitigen Hebelarm verbindende Ankopplungsstelle hinaus erstreckenden Verlängerung im Verhältnis zu der Länge des sich zwischen dieser Ankopplungsstelle und der ersten Abstützstelle erstreckenden eingangsseitigen Hebelarms wird dabei die der Vollast der Waage entsprechende Kalibrierkraft entsprechend herabgesetzt, beispielsweise auf 1/10 bis 1/40 der Vollast. Somit ist die Vollastkalibrierung mit einem verhältnismäßig leichten Kalibriergewicht möglich und kann die Waage kompakt und gewichtssparend aufgebaut werden.

In einer vorteilhaften Ausführungsform ist vorgesehen, daß der Ankopplungsbereich für das Kalibriergewicht eine dessen Lageeinstellung auf der Verlängerung dienende Führung aufweist, an der das Kalibriergewicht unter dem Einfluß der Schwerkraft in seine Sollage überführbar ist. Dabei braucht die Stelle, an der das Kalibriergewicht an die Führung übergeben wird, nicht besonders genau bestimmt zu sein. Indem das Kalibriergewicht unter dem Einfluß der Schwerkraft die Führung durchläuft, gelangt es selbsttätig an seine genau bestimmte Sollage, so daß seine Entfernung von der ersten Abstützstelle des ersten Hebels beim Kalibriervorgang sehr genau eingehalten wird.

Ein zweckmäßiger Aufbau der erfindungsgemäßen Waage zeichnet sich dadurch aus, daß die Verlängerung des eingangsseitigen Hebelarms des ersten Hebels durch zwei sich quer zur Parallelogrammebene in einem Abstand gegenüberliegende Schenkel gebildet ist, deren zum feststehenden Teil weisende Enden mit dem ersten Hebel fest verbunden sind, an deren dazu entgegengesetzten Enden der Ankopplungsbereich für das Kalibriergewicht ausgebildet ist und zwischen denen sich der Lastaufnehmer mit seitlichem Spiel erstreckt. Hierbei können die beiden Schenkel unabhängig von der Dimensionierung des von dem Lastaufnehmer, dem feststehenden Teil und den beiden Lenkern umgrenzten Parallelogramminnenraums in einer für die gewünschte Vollast und den gewünschten Gewichtswert des Kaliriergewichts geeigneten Weise dimensioniert werden. Insbesondere können sie von dem ersten Hebel getrennt ausgebildet und an letzterem durch Schrauben festgelegt werden.

Eine in diesem Zusammenhang zweckmäßige weitere Ausgestaltung besteht darin, daß die den Ankopplungsbereich bildenden Enden der beiden Schenkel in der Form von sich entgegengesetzt zur Schwerkraftrichtung erstreckenden Aufnahmegabeln für das in der Schwerkraftrichtung aufzulegende Kalibriergewicht ausgebildet sind. Das Kalibriergewicht gleitet bei seiner Auflegung so tief in die Aufnahmegabeln hinein, daß es darin horizontal unverrückbar in seiner genauen Sollage in bezug auf die erste Abstützstelle des ersten Hebels festgelegt wird, wodurch der Kalibriervorgang mit großer Genauigkeit ausgeführt werden kann.

Aus Stabilitätsgründen ist es zweckmäßig, daß die beiden Schenkel im Bereich ihrer den Ankopplungsbereich bildenden Enden durch eine sich quer zur Parallelogrammebene erstreckende Strebe miteinander verbunden sind.

Gemäß einem weiteren Gedanken der Erfindung ist vorgesehen, daß der Kraftwandler in einem zwischen der dem feststehenden Teil abgewandten Seite des Lastaufnehmers und dem Ankopplungsbereich des Kalibriergewichts begrenzten Raum angeordnet ist. Eine hierfür besonders bevorzugte Ausgestaltung und Anordnung des ersten Hebels besteht darin, daß dessen ausgangsseitiger Hebelarm sich von der Abstützstelle in Richtung auf den feststehenden Teil erstreckt. Für den mit dem ausgangsseitigen Hebelarm des ersten Hebels kräftemäßig gekoppelten zweiten Hebel ist es bevorzugt, wenn dessen Abstützstelle an dem zum Lastaufnehmer weisenden Bereich des feststehenden Teils gelagert ist, und er einen in Richtung auf den Lastaufnehmer sich erstreckenden Bereich aufweist, der zur Weiterleitung der Gewichtskraft an den Kraftwandler dient, wobei dieser Bereich eine sich bis zu dem Kraftwandler erstreckende Fortsetzung aufweist. Bei dieser Anordnung steht der für den Kraftwandler erforderliche Raumbedarf gleichzeitig für die sich in der Richtung der Parallelogrammebene durch diesen Raum hindurch erstreckende Verlängerung des eingangsseitigen Hebelarms zur Verfügung, wodurch ein wünschenswert großes Übersetzungsverhältnis für das Kalibriergewicht bei raumsparender Bauweise erreichbar ist.

In diesem Zusammenhang besteht eine vorteilhafte Weiterbildung darin, daß der Kraftwandler an zwei sich quer zur Parallelogrammebene in einem Abstand gegenüberliegenden streben abgestützt ist,.die sich mit seitlichem Spiel an dem Lastaufnehmer vorbei erstrecken und an einem zum Lastaufnehmer weisenden Bereich des feststehenden Teils festgelegt sind.

Auch ist es vorteilhaft, daß die Fortsetzung des zweiten Hebels durch zwei sich quer zur Parallelogrammebene in einem Abstand gegenüberliegende und an dem sich in Richtung auf den Lastaufnehmer erstreckenden Bereich des zweiten Hebels festgelegte Verlängerungsschenkel gebildet ist, zwischen denen sich der Lastaufnehmer mit seitlichem Spiel erstreckt. Die seitlichen Schenkel sind dabei derart gestaltet, daß sie die gewünschte Festigkeit gegenüber der an ihnen angreifenden Kraft aufweisen, wobei jedoch gleichzeitig ihr seitlicher Platzbedarf klein gehalten werden kann.

Mit Vorteil wird der erfindungsgemäße Aufbau in Waagen verwirklicht, bei denen der Kraftwandler ein elektromagnetisches Kraftkompensationssystem ist, dessen Lastkompensationsspule an den dem Kraftwandler zugewandten Enden der Verlängerungsschenkel angeordnet ist. Bei derartigen Waagen wird ein durch die Lastkompensationsspule fließender Strom derart geregelt, daß die auf die Lastkompensationsspule ausgeübte magnetische Kraft mit der von der Gewichtskraft der zu wiegenden Last hervorgerufenen Kraft im Gleichgewicht steht und dadurch der Lastaufnehmer und das Hebelwerk in seiner von einem Lagedetektor überwachten Nullage gehalten wird. Auf diese Weise liefert der durch die Lastkompensationsspule fließende Strom ein Maß für die zu wiegende Last.

Eine besonders wichtige Ausführungsform zeichnet sich dadurch aus, daß der Lastaufnehmer, die Lenker, der feststehende Teil und die Hebel als einstückig zusammenhängende, durch materialfreie Bereiche gegeneinander abgegrenzte Materialbereiche eines Materialblocks ausgebildet sind. Durch diese einstückige Ausbildung entfällt die sonst für die Verbindung dieser Teile erforderliche Montagearbeit, die insbesondere eine hochgenaue Lageeinstellung der Abstützstellen der Hebel und aller Ankopplungsstellen verlangt.

Mit besonderem Vorteil ist dabei vorgesehen, daß die materialfreien Bereiche zumindest teilweise nur durch den Materialblock quer zur Parallelogrammebene durchsetzende dünne Schnittlinien gebildet sind. Diese dünnen Schnittlinien lassen sich beispielsweise durch Funkenerodieren herstellen. Da in diesem Fall der Raumbedarf für die materialfreien Bereiche minimal ist, ergibt sich einerseits ein sehr kompakter Aufbau. Andererseits steht für die die einzelnen Teile der Parallelogrammführung und des Hebelwerks bildenden Materialbereiche der größtmögliche Raum zur Verfügung, so daß diese Teile besonders stark ausgebildet werden können.

Ferner ist im Rahmen der Erfindung vorgesehen, daß eine dem Ankopplungsbereich für das Kalibriergewicht zugeordnete Hebevorrichtung vorgesehen ist, durch die das Kalibriergewicht zwischen einer Kalibrierbetriebsstellung, in der es an dem Ankopplungsbereich abgestützt ist, und einer Ruhestellung, in der es von dem Ankopplungsbereich abgehoben ist, verlagerbar ist. Dank dieser Hebevorrichtung braucht das Kalibriergewicht nicht manuell gehandhabt zu werden. Vielmehr kann der Kalibrierbetrieb durch Ansteuerung der Hebevorrichtung von einer Bedienungstastatur der Waage aus durchgeführt werden.

Dabei erweist es sich als vorteilhaft, daß das Kalibriergewicht im wesentlichen die Form eines langgestreckten Zylinders mit sich quer zur Schwerkraftrichtung erstreckender Zylinderlängsachse aufweist, der durch die Hebevorrichtung gegen Verdrehung um die Längsachse gesichert ist. Sofern nicht ein hoher Herstellungsaufwand für das Kalibriergewicht in Kauf genommen wird, weicht wegen minimaler Exzentrizitäten die Schwerelinie des zylindrischen Kalibriergewichts von der Zylinderlängsachse ab. Durch die Sicherung gegen Verdrehung führen diese Abweichungen von der Rotationssymmetrie zu keinen meßbaren Abweichungen zwischen aufeinanderfolgenden Kalibrierungen. Trotz Nichteinhaltung der Rotationssymmetrie werden daher Fehlkalibrierungen vermieden.

Eine zweckmäßige Ausgestaltung besteht darin, daß in der zylindrischen Mantelfläche des Kalibriergewichts ein ebener Flächenbereich ausgebildet ist, an dem es auf drei Abstützstellen eines seiner Verlagerung zwischen seiner Ruhestellung und seiner Kalibrierbetriebsstellung dienenden Hebeteils der Hebevorrichtung drehfest aufliegt. Durch diese Dreipunktabstützung wird stets ein und dieselbe Drehlage des Kalibriergewichts mit großer Genauigkeit eingehalten, was zu einer hohen Kalibriergenauigkeit führt.

Weitere Merkmale, Einzelheiten und Vorteile der Erfindung ergeben sich aus der folgenden Beschreibung und der Zeichnung, auf deren erfindungswesentliche Offenbarung aller in der Beschreibung nicht ausdrücklich erwähnten Einzelheiten hingewiesen wird. Hierin zeigen:
- Fig. 1: eine perspektivische Ansicht wesentlicher Teile einer Waage bei abgenommenem Gehäuse, abgenommener Waagschale und abgenommenem Kalibriergewicht in der Betrachtungsrichtung eines seitlich und etwas von oben blickenden Betrachters,
- Fig. 2: eine der Fig. 1 entsprechende Ansicht mit aufgelegtem Kalibriergewicht,
- Fig. 3: eine teilweise geschnittene seitliche Aufsicht auf die Waage, und
- Fig. 4(a) und (b): teilweise geschnittene Aufsichten auf gegenüberliegende Seiten einer Hebevorrichtung für das Kalibriergewicht.

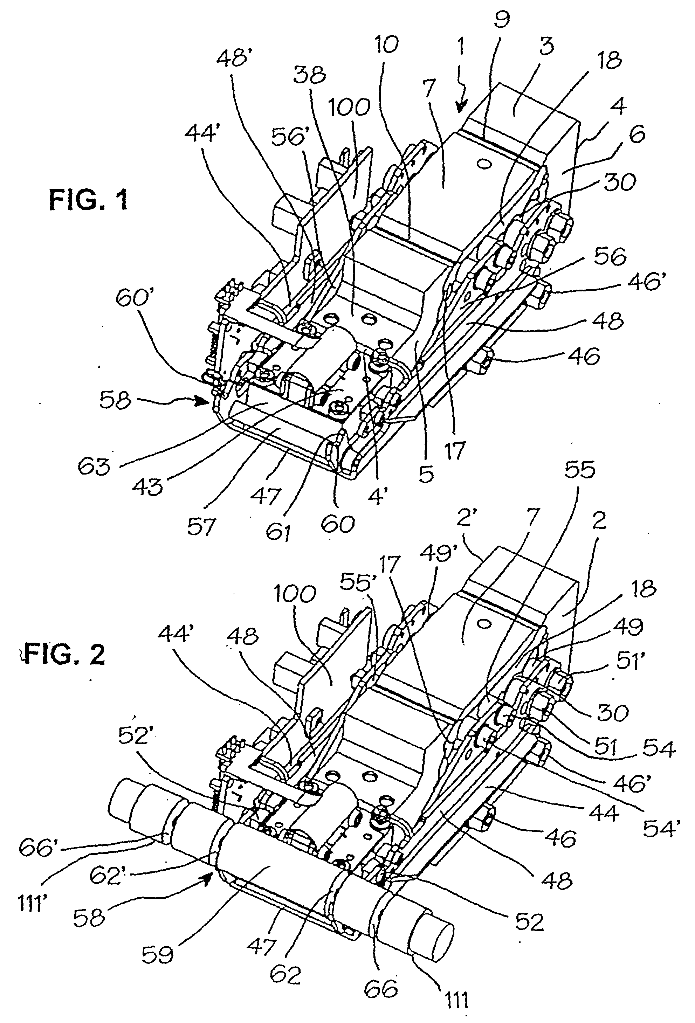

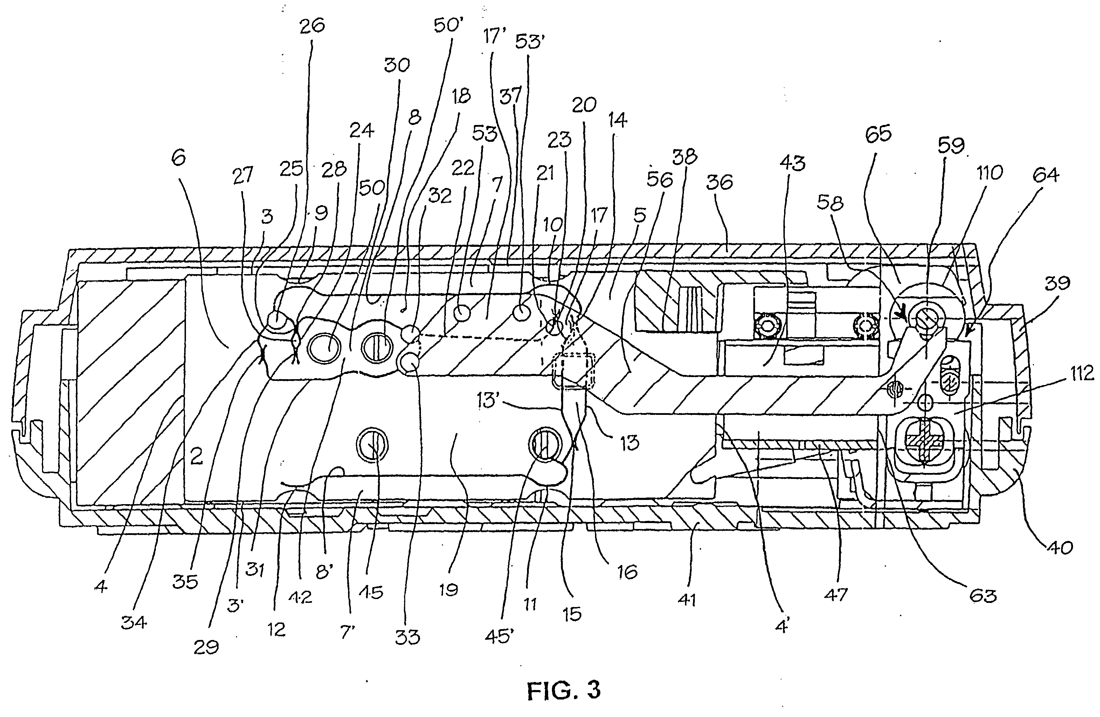

Wie aus Fig. 1 bis 3 ersichtlich ist, weist die Waage einen einstückigen Materialblock 1 auf, dessen beide größten Seitenflächen 2 sich in Fig. 3 parallel zur Zeichnungsebene erstrecken, wobei eine der beiden größten Quaderseitenflächen 2 in Fig. 3 zum Betrachter weist. Von den beiden anderen Paaren von Schmalseiten, die sich senkrecht zu dem Paar größter Quaderseitenflächen 2 erstrecken, weist in Fig. 1 eine der beiden längeren Schmalseiten 3 nach oben, während die dazu parallele, nach unten weisende längere Schmalseite 3' verdeckt ist. Ferner weist in Fig. 1 und 2 eine der beiden kürzeren Schmalseiten 4 nach hinten, während die dazu parallele, nach vorne weisende kürzere Schmalseite 4' im wesentlichen verdeckt ist.

In dem Materialblock 1 sind ein Lastaufnehmer 5, ein feststehender Teil 6 und zwei zueinander parallele Lenker 7, 7' ausgebildet, die an ihren einander abgewandten Außenseiten von den längeren Schmalseiten 3, 3' und an ihren einander zugewandten Innenseiten von materialfreie Bereiche bildenden dünnen Schnittlinien 8, 8' begrenzt sind. Die Enden der Lenker 7, 7', an denen sie einerseits mit dem Lastaufnehmer 5 und andererseits mit dem feststehenden Teil 6 zusammenhängen, sind durch zu der den jeweiligen Lenker 7, 7' außen begrenzenden Schmalseite 3 bzw. 3' hin gewölbte Abschnitte der dünnen Schnittlinien 8 bzw. 8' und den gewölbten Abschnitten spiegelbildlich gegenüberstehende gewölbte Ausnehmungen der Schmalseiten 3 bzw. 3' als biegsame Dünnstellen 9, 10, 11, 12 ausgebildet. Diese biegsamen Dünnstellen 9 bis 12 bilden die Eckpunkte eines Parallelogramms, dessen Parallelogrammebene sich parallel zur Zeichnungsebene von Fig. 3 erstreckt.

Die mit Ausnahme ihrer gewölbten Abschnitte im wesentlichen parallel zu den längeren Schmalseiten 3, 3' verlaufenden dünnen Schnittlinien 8, 8' weisen über die lastaufnehmerseitigen Dünnstellen 10, 11 hinaus verlängerte Abschnitte 13 bzw. 13' auf, die sich jeweils im wesentlichen parallel zu einer die lastaufnehmerseitigen Dünnstellen 10, 11 verbindenden gedachten Geraden bis in die Nähe des jeweils gegenüberliegenden Lenkers 7' bzw. 7 erstrecken, wo sie zueinander spiegelbildlich aufeinander zulaufend konvex gewölbt sind und dadurch zwischen sich biegsame Dünnstellen 14, 15 begrenzen, zwischen denen sich ein von den zueinander parallelen Bereichen der Abschnitte 13, 13' begrenztes Koppelglied 16 erstreckt. Letzteres hängt über die dem Lenker 7' benachbarte biegsame Dünnstelle 15 mit dem Lastaufnehmer 5 zusammen.

An der der biegsamen Dünnstelle 15 entgegengesetzten biegsamen Dünnstelle 14 hängt das Koppelglied 16 mit einem eingangsseitigen Hebelarm 17 eines ersten Hebels 18 zusammen, der an seiner zur längeren Schmalseite 3 weisenden Seite von der den Lenker 7 begrenzenden dünnen Schnittlinie 8 begrenzt ist. In einem sich zwischen den Lenkern 7, 7' zum Lastaufnehmer 5 hin erstreckenden Bereich 19 des feststehenden Teils 6 ist ein ausgehend von dem Schnittlinienabschnitt 13' in Richtung auf die längere Schmalseite 3 verlaufendes Schnittlinienstück 20 mit zur kürzeren Schmalseite 4 hin weisender konvexer Krümmung ausgebildet. Diesem Schnittlinienstück 20 steht ein in bezug auf die die lastaufnehmerseitigen Dünnstellen 10, 11 verbindende gedachte Gerade spiegelbildlich verlaufendes Schnittlinienstück 21 gegenüber, an dessen zum Lenker 7' weisenden Ende sich ein ebenfalls dünner Schnittlinienabschnitt 22 anschließt, der sich in Richtung auf die den feststehenden Teil 6 begrenzende kürzere Schmalseite 4 erstreckt und anschließend an eine die lastaufnehmerseitigen biegsamen Dünnstellen 9, 12 verbindende gedachte Gerade heranläuft, der er ein Stück in Richtung auf die dem ersten Hebel 18 abgewandte Schmalseite 3' folgt. Die dieser Geraden folgende Verlängerung 24 des dünnen Schnittlinienabschnittes 22 verläuft in ihren Endbereichen zu dieser gedachten Geraden hin konvex gekrümmt, wobei diesem Verlauf ein in bezug auf diese gedachte Gerade spiegelbildlich verlaufender Schnittlinienabschnitt 25 gegenübersteht, der in eine Bohrung 26 einmündet, in die auch das lastaufnehmerseitige Ende der den ersten Hebel 18 begrenzenden dünnen Schnittlinie 8 einläuft. Diese Bohrung 26 kann zur Einführung eines Funkenerosionsdrahtes dienen, wenn die dünnen Schnittlinien durch das Verfahren der Funkenerosion hergestellt werden. Statt der vorstehend beschriebenen Anordnung der Dünnstellen 9, 12 auf der sich rechtwinklig zu den längeren Schmalseiten 3, 3' erstrekkenden gedachten Geraden könnten die Dünnstellen aber auch geringfügig gegeneinander versetzt sein. Ebenso müssen auch die Dünnstellen 10, 11 nicht lotrecht übereinanderliegen.

Ähnlich wie die das Koppelglied 16 bildenden Schnittlinienabschnitte 13, 13' begrenzen die Verlängerung 24 und der Schnittlinienabschnitt 25 zwischen sich ein zweites Koppelglied 27, dessen mit dem ersten Hebel 18 zusammenhängendes Ende eine biegsame Dünnstelle 28 bildet.

Ebenso bildet das der biegsamen Dünnstelle 28 entgegengesetzte Ende des Koppelgliedes 27 eine biegsame Dünnstelle 29, an der das zweite Koppelglied 27 mit einem zweiten Hebel 30 zusammenhängt, der an seiner zum ersten Hebel 18 weisenden Seite von dem Schnittlinienabschnitt 22 begrenzt ist. An seiner dem ersten Hebel 18 abgewandten Seite ist der zweite Hebel 30 von dem Bereich 19 des feststehenden Teils 6 durch eine sich im wesentlichen in der Längsrichtung der längeren Schmalseiten 3, 3' erstreckende dünne Schnittlinie 31 begrenzt, die an ihrem zum Lastaufnehmer 5 weisenden Ende über zwei Bohrungen 32, 33 hinweg mit dem den ersten Hebel 18 begrenzenden dünnen Schnittlinienabschnitt 22 in Verbindung steht und an ihrem zum feststehenden Teil 6 weisenden Ende an eine zu der die dem feststehenden Teil 6 nächstgelegenen Dünnstellen 9, 12 verbindenden gedachten Geraden parallele Gerade konvex gekrümmt heranläuft. Zu diesem konvex gekrümmten Verlauf erstreckt sich in bezug auf die gedachte parallele Gerade spiegelbildlich ein konvex gekrümmter Bereich eines in die Bohrung 26 mündenden kurzen Schnittlinienabschnitts 34. Der zwischen den konvex gekrümmten Abschnitten begrenzte Materialbereich bildet eine biegsame Dünnstelle 35, die eine zweite Abstützstelle darstellt, welche als Hebeldrehpunkt für den zweiten Hebel 30 dient.

Auf diese Weise ist der zweite Hebel 30 mit dem sich zwischen der biegsamen Dünnstelle 28 des zweiten Koppelgliedes 27 und der ersten Abstützstelle 23 erstreckenden ausgangsseitigen Hebelarm 17' des ersten Hebels 18 kräftemäßig gekoppelt, dessen sich zwischen der ersten Abstützstelle 23 und der biegsamen Dünnstelle 14 erstreckender eingangsseitiger Hebelarm 17 an den Lastaufnehmer 5 kräftemäßig angekoppelt ist. Eine oberhalb des von der längeren Schmalseite 3 begrenzten Lenkers 7 angeordnete Waagschale (nicht dargestellt) für eine zu wiegende Last ist mittels eines in Fig. 3 nur schematisch und teilweise geschnitten dargestellten Auslegers 37 an einer in Fig. 1 und 2 besonders deutlich sichtbaren Abstützfläche 38 des Lastaufnehmers 5 festgelegt. Dabei erstreckt sich ein die Waagschale tragender Stützzapfen des Auslegers 37 in nicht dargestellter Weise durch eine Öffnung eines Gehäuseoberteils 36 hindurch, über dem die Waagschale angeordnet ist. Der seitliche Rand 39 des Gehäuseoberteils 36 ist bis zu einem nach oben ragenden Rand 40 einer Waagengrundplatte 41 nach unten gezogen, an der der feststehende Teil 6 in nicht näher dargestellter Weise festgelegt ist. Bei Auflegung einer Last auf die Waagschale hat daher der Lastaufnehmer 5 die Tendenz, sich parallel zu der durch die biegsamen Dünnstellen 10, 11 verlaufenden gedachten Geraden nach unten zu bewegen, wodurch der erste Hebel 18 dazu tendiert, sich in Fig. 3 im Uhrzeigersinn um die erste Abstützstelle 23 zu drehen, während der damit gekoppelte zweite Hebel 30 dazu tendiert, sich im Gegenuhrzeigersinn um die zweite Abstützstelle 35 zu drehen. Diese Bewegungstendenz des den ersten und den zweiten Hebel 18, 30 aufweisenden Hebelwerks beruht darauf, daß der erste Hebel 18 zweiarmig ist, d. h. sein eingangsseitiger Hebelarm 17 und sein ausgangsseitiger Hebelarm 17' in bezug auf die erste Abstützstelle 23 sich in zueinander entgegengesetzten Richtungen erstrecken, während der zweite Hebel 30 einarmig ist, d. h. sein sich zwischen dem von der zweiten Abstützstelle 35 gebildeten Hebeldrehpunkt und der den zweiten Hebel 30 mit dem ersten Hebel 18 koppelnden Dünnstelle 29 erstreckender Bereich in dieselbe Richtung weist wie sein von dieser Dünnstelle 29 aus in Richtung auf den Lastaufnehmer 5 sich erstreckender Bereich 42.

Diese Bewegungstendenz des Hebelwerks wird auf einen Kraftwandler 43 übertragen, der an die den Lastaufnehmer 5 nach außen begrenzende kürzere Schmalseite 4' des Materialblocks 1 angrenzt. Aus Fig. 1 und 2 ist ersichtlich, daß dieser Kraftwandler 43 an dem feststehenden Teil 6 mittels zwei Streben 44, 44' abgestützt ist, die von Bohrungen 45, 45' (Fig. 3) des zum Lastaufnehmer 5 weisenden Bereichs 19 des feststehenden Teils durchsetzenden Schraubbolzen 46, 46' an den sich parallel zur Parallelogrammebene erstreckenden Quaderseitenflächen 2, 2' festgespannt sind, wobei zwischen den Quaderseitenflächen 2, 2' und der jeweiligen Strebe 44 bzw. 44' Abstandshalter angeordnet sind, die es ermöglichen, daß der Lastaufnehmer 5 sowie noch zu beschreibende weitere Teile der Waage mit seitlichem Spiel zwischen den Streben 44, 44' aufgenommen sind. In ihrem über die den Lastaufnehmer 5 begrenzende kürzere Schmalseite 4' des Materialblocks 1 hinausragenden Bereich sind die beiden Streben 44, 44' durch eine sich quer zur Bewegungsrichtung des Lastaufnehmers 5 erstrekkende Plattform 47 miteinander verbunden, auf der der Kraftwandler 43 aufsitzt. Er besteht in dem dargestellten Ausführungsbeispiel aus einem dem Fachmann bekannten Kraftkompensationssystem, bei dem eine von der durch das Hebelwerk untersetzten Gewichtskraft der zu wiegenden Last beaufschlagte Lastkompensationsspule in den Luftspalt eines auf der Plattform 47 befestigten Permanentmagnetsystems eintaucht und von einer Steuerelektronik 100 der Waage der durch die Kraftkompensationsspule fließende Kompensationsstrom derart geregelt wird, daß die sich zwischen dem Permanentmagnetsystem und der Lastkompensationsspule einstellende Kraftwirkung die Wirkung der Gewichtskraft kompensiert, wodurch das Hebelwerk in seine Bewegungsnullage eingeregelt wird, was durch einen an einen Regeleingang der Steuerschaltung 100 angeschlossenen Positionsdetektor festgestellt wird.

Der Übertragung der von dem Hebelwerk untersetzten Gewichtskraft dienen zwei Verlängerungsschenkel 48, 48' des sich in Richtung auf den Lastaufnehmer 5 erstreckenden Bereichs 42 des zweiten Hebels 30. Diese Verlängerungsschenkel 48, 48' sind an jeweils einem Ende unter Zwischenschaltung von Abstandshaltern 49, 49' mittels Bohrungen 50, 50' (Fig. 3) in dem Bereich 42 des zweiten Hebels 30 durchsetzenden Schraubbolzen 51, 51' an den den zweiten Hebel 30 begrenzenden Bereichen der größten Quaderseitenflächen 2, 2' festgespannt. Dabei sind die Abstandshalter 49, 49' derart bemessen, daß sich die Verlängerungsschenkel 48, 48' in dem zwischen den Streben 44, 44' und den größten Quaderseitenflächen 2 bzw. 2' begrenzten Raum mit Spiel erstrecken. An den den Bohrungen 50, 50' entgegengesetzten Enden 52, 52' der Verlängerungsschenkel 48, 48' ist die in das Permanentmagnetsystem eintauchende Kraftkompensationsspule befestigt.

An den von den beiden größten Quaderseitenflächen 2, 2' begrenzten Seiten des ersten Hebels 18 sind quer zur Parallelogrammebene einander gegenüberliegend mittels Bohrungen 53, 53' des ersten Hebels 18 (Fig. 3) durchsetzenden Schraubbolzen 54, 54' (Fig. 2) unter Zwischenschaltung von Abstandshaltern 55, 55' zwei Schenkel 56, 56' festgespannt. Dabei sind die Abstandshalter 55, 55' derart bemessen, daß sich die Schenkel 56, 56' jeweils mit Spiel zwischen der betreffenden Seitenfläche 2, 2' und dem jeweiligen Verlängerungsschenkel 48 bzw. 48' erstrecken, welcher die Kraftkompensationsspule trägt.

Die Schenkel 56, 56' erstrecken sich von ihren mittels der Schraubbolzen 54, 54' an dem ersten Hebel 18 festgelegten Enden aus über die Ankopplungsstelle 14 des ersten Hebels 18 hinaus an dem Lastaufnehmer 5 vorbei in den den Kraftwandler 43 aufnehmenden Raum hinein und über letzteren hinaus, wodurch sie eine über die den Lastaufnehmer 5 an seiner dem feststehenden Teil 6 abgewandten Seite begrenzende kürzere Schmalseite 4' des Materialblocks 1 hinausreichende Verlängerung des eingangsseitigen Hebelarms 17 bilden. An ihrem den Schraubbolzen 54, 54' abgewandten Endbereich sind die Schenkel 56, 56' durch eine sich quer zur Parallelogrammebene erstreckende Strebe 57 miteinander verbunden. Ferner ist dort an den Schenkeln 56, 56' ein Ankopplungsbereich 58 für ein Kalibriergewicht 59 ausgebildet. Es ist denkbar, aber weniger günstig, daß sich die Schenkel 56, 56' über die Schmalseite 4' des Materialblocks 1 hinaus nur bis in den vom Lastwandler 43 eingenommenen Raum erstrecken und dort so weit nach oben geführt sind, daß der Ankopplungsbereich 58 in einem oberhalb des Kraftaufnehmers 43 begrenzten freien Raum zu liegen kommt. Um Niveaufehler zu vermeiden, wird die Anordnung vorzugsweise derart getroffen, daß der Schwerpunkt des Kalibriergewichts 59, die erste Abstützstelle 23 des ersten Hebels 18 und die zu dessen Ankopplung dienende Dünnstelle 14 auf einer gemeinsamen Geraden liegen.

Den Ankopplungsbereich 58 bilden die als Aufnahmegabeln 60, 60' ausgebildeten Enden der Schenkel 56, 56'. Im einzelnen weisen die Aufnahmegabeln 60, 60' jeweils zwei von ihrer Basis aus divergierend entgegengesetzt zur Schwerkraftrichtung sich erstreckende Gabelzinken auf, deren einander zugewandte Innenkanten 61 als Führung dienen, durch die das in der Schwerkraftrichtung aufzulegende Kalibriergewicht 59 zur Basis hin geführt und dort formschlüssig in seiner genauen Sollage gehalten wird. Zu diesem Zweck weist das zylinderförmige Kalibriergewicht 59 entsprechend dimensionierte Eingriffsnuten 62, 62' auf, in die die Aufnahmegabeln 60, 60' eingreifen.

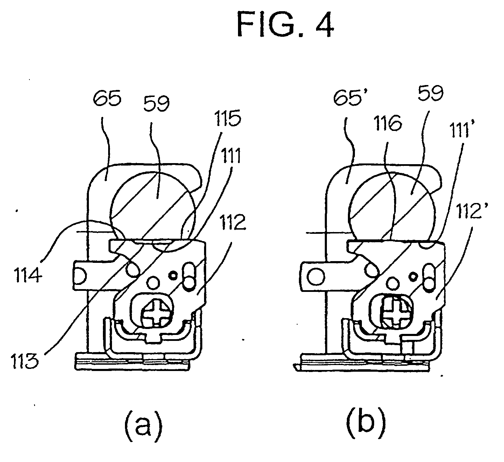

. Nahe angrenzend an die dem Materialblock 1 abgewandte Stirnseite 63 des Kraftwandlers 43 ist auf der Waagengrundplatte 41 eine elektrisch angetriebene Hebevorrichtung 64 (Fig. 3 und 4) angeordnet, durch die das Kalibriergewicht 59 für einen Kalibrierbetrieb auf den Ankopplungsbereich 58 aufgelegt und für den Normalbetrieb der Waage in eine Ruhestellung abgehoben werden kann, in der das Kalibriergewicht 59 gegen eine seiner Fixierung dienende Gegenhalterung 65, 65' gedrückt wird, die in umlaufende Arretierungsnuten 66, 66' des Kalibriergewichts 59 eingreift.

Bei dieser Anordnung wird also die von dem Kalibriergewicht 59 ausgeübte Kalibrierkraft in einem Verhältnis übersetzt, das durch den Abstand zwischen der ersten Abstützstelle 23 und dem Ankopplungsbereich 58 einerseits und der Länge des eingangsseitigen Hebelarms 17, nämlich dem Abstand zwischen der ersten Abstützstelle 23 und der Ankopplungsstelle 14 andererseits, bestimmt ist. Die Waage kann daher mit einem verhältnismäßig kleinen Kalibriergewicht unter Vollastbedingung kalibriert werden.

Die Darstellungen von Fig. 4 (a) und (b), welche zur Parallelogrammebene senkrechte Aufsichten auf die beiden Seiten der Hebevorrichtung 64 zeigen, lassen erkennen, daß das im wesentlichen zylinderförmige Kalibriergewicht 59 in seiner zylinderförmigen Mantelfläche 110 zwei zu einer Tangentialebene an die Mantelfläche 110 parallele, ebenflächige Anfräsungen 111 bzw. 111' aufweist, die sich jeweils ausgehend von den Eingriffsnuten 62, 62' (Fig. 2) in dem zwischen den beiden Eingriffsnuten 62, 62' begrenzten Bereich des Kalibriergewichts 59 erstrecken. Diese beiden Ausfräsungen 111, 111' bilden zusammen einen ebenen Flächenbereich zur drehfesten Abstützung des Kalibriergewichts 59 auf zwei unterhalb dieser Ausfräsungen 111, 111' angeordneten Hebeschenkeln 112 bzw. 112' eines parallel zur Schwerkraftrichtung zwischen der Ruhestellung und der Kalibrierbetriebsstellung verschiebbaren Hebeteils der Hebevorrichtung 64. Dabei sind an der der einen ebenflächigen Anfräsung 111 zugewandten Endfläche des einen Hebeschenkels 112 zwei durch eine Ausnehmung 113 voneinander getrennte, lokalisierte Abstützstellen 114, 115 ausgebildet, auf denen das Kalibriergewicht 59 mit seiner ebenflächigen Anfräsung 111 aufliegt. An der der anderen ebenflächigen Anfräsung 111 zugewandten Endfläche des anderen Hebeschenkels 112' ist dagegen nur eine einzige, über das übrige Niveau dieser Endfläche vorstehende, lokalisierte Abstützstelle 116 ausgebildet. Insgesamt liegt daher das Kalibriergewicht 59 mit seinen ebenflächigen Anfräsungen 111, 111' allein auf den drei Abstützstellen 114, 115 und 116 auf. Auf diese Weise ist seine Drehstellung in der Ruhestellung genau bestimmt. Dadurch wird es bei seiner Verlagerung in die Kalibrierbetriebsstellung stets in der gleichen Drehstellung auf die Aufnahmegabeln 60, 60' des Ankopplungsbereichs 58 aufgelegt.

### Verzeichnis der Bezugszeichen

- 1: Materialblock
- 2, 2': größte Quaderseitenflächen
- 3, 3': längere Schmalseiten
- 4, 4': kürzere Schmalseiten
- 5: Lastaufnehmer
- 6: feststehender Teil
- 7, 7': Lenker
- 8, 8': dünne Schnittlinien
- 9, 10, 11, 12: biegsame Dünnstellen
- 13, 13': Abschnitte der Schnittlinien
- 14, 15: biegsame Dünnstellen
- 16: Koppelglied
- 17: eingangsseitiger Hebelarm
- 17': ausgangsseitiger Hebelarm
- 18: erster Hebel
- 19: Bereich des feststehenden Teils
- 20: Schnittlinienstück
- 21: Schnittlinienstück
- 22: dünner Schnittlinienabschnitt
- 23: erste Abstützstelle
- 24: Verlängerung
- 25: Schnittlinienabschnitt
- 26: Bohrung
- 27: zweites Koppelglied
- 28: biegsame Dünnstelle
- 29: biegsame Dünnstelle
- 30: zweiter Hebel
- 31: dünne Schnittlinie
- 32, 33: Bohrung
- 34: Schnittlinienabschnitt
- 35: biegsame Dünnstelle = zweite Abstützstelle
- 36: Gehäuseoberteil
- 37: Ausleger
- 38: Abstützfläche
- 39: Rand
- 40: Rand
- 41: Waagengrundplatte
- 42: Bereich des zweiten Hebels
- 43: Kraftwandler
- 44, 44': Streben
- 45, 45': Bohrungen
- 46, 46': Schraubbolzen
- 47: Plattform
- 48, 48': Verlängerungsschenkel
- 49, 49': Abstandshalter
- 50, 50': Bohrungen
- 51, 51': Schraubbolzen
- 52, 52': Enden
- 53, 53': Bohrungen
- 54, 54': Schraubbolzen
- 55, 55': Abstandshalter
- 56, 56': Schenkel
- 57: Strebe
- 58: Ankopplungsbereich
- 59: Kalibriergewicht
- 60, 60': Aufnahmegabeln
- 61: Innenkante
- 62, 62': Eingriffsnuten
- 63: Stirnseite des Kraftwandlers
- 64: Hebevorrichtung
- 65: Gegenhalterung
- 66, 66': Arretierungsnuten
- 100: Steuerschaltung, Steuerelektronik
- 110: Mantelfläche
- 111, 111': ebenflächige Anfräsungen
- 112, 112': Hebeschenkel
- 113: Ausnehmung
- 114, 115: Abstützstellen
- 116: Abstützstelle

## Patentansprüche

1. Waage mit einem zur Einleitung der Gewichtskraft einer zu wiegenden Last dienenden Lastaufnehmer (5), der von zwei in einem Abstand parallel zueinander sich erstreckenden Lenkern (7, 7'), deren jeder an einem Ende (10, 11) mit dem Lastaufnehmer (5) und an einem dazu entgegengesetzten anderen Ende (9, 12) mit einem feststehenden Teil (6) der Waage verbunden ist, an dem feststehenden Teil (6) der Waage in der Ebene eines durch die vier Enden (9, 10, 11, 12) der Lenker (7, 7') bestimmten Parallelogramms parallel auslenkbar geführt ist, mit einem zur Umwandlung der Gewichtskraft in ein elektrisches Meßsignal dienenden Kraftwandler (43), und mit einem einen ersten und einen zweiten Hebel (18, 30) sowie einen zur lösbaren Verbindung mit einem Kalibriergewicht (59) dienenden Ankopplungsbereich (58) aufweisenden, zur Übertragung der Gewichtskraft von dem Lastaufnehmer (5) zu dem Kraftwandler (43) dienenden Hebelwerk, dessen erster Hebel (18) einen sich von einer an einem zum feststehenden Teil (6) weisenden Bereich (16) des Lastaufnehmers (5) ausgebildeten, zur kräftemäßigen Verbindung mit dem Lastaufnehmer (5) dienenden Ankopplungsstelle (14) zu einer an einem zum Lastaufnehmer (5) weisenden Bereich (19) des feststehenden Teils (6) ausgebildeten, als Hebeldrehpunkt dienenden ersten Abstützstelle (23) erstreckenden eingangsseitigen Hebelarm (17) sowie einen ausgangsseitigen Hebelarm (17') aufweist, und dessen zweiter (30) Hebel an einer als Hebeldrehpunkt dienenden zweiten Abstützstelle (35) gelagert und mit dem ausgangsseitigen Hebelarm (17') des ersten Hebels (18) kräftemäßig gekoppelt ist, **dadurch gekennzeichnet, daß** der eingangsseitige Hebelarm (17) des ersten Hebels (18) eine Verlängerung aufweist, die sich über die Ankopplungsstelle (14) hinaus bis in den an die dem feststehenden Teil (6) abgewandte Seite (4') des Lastaufnehmers (5) angrenzenden Raum hinein erstreckt und dort mit dem Ankopplungsbereich (58) für das Kalibriergewicht (59) versehen ist.

2. Waage nach Anspruch 1, **dadurch gekennzeichnet, daß** der Ankopplungsbereich (58) für das Kalibriergewicht (59) eine dessen Lageeinstellung auf der Verlängerung dienende Führung (61) aufweist, an der das Kalibriergewicht (59) unter dem Einfluß der Schwerkraft in seine Sollage überführbar ist.

3. Waage nach Anspruch 1 oder 2, **dadurch gekennzeichnet, daß** die Verlängerung des eingangsseitigen Hebelarms (17) des ersten Hebels (18) durch zwei sich quer zur Parallelogrammebene in einem Abstand gegenüberliegende Schenkel (56, 56') gebildet ist, deren zum feststehenden Teil (6) weisende Enden mit dem ersten Hebel (18) fest verbunden sind, an deren dazu entgegengesetzten Enden der Ankopplungsbereich (58) für das Kalibriergewicht (59) ausgebildet ist und zwischen denen sich der Lastaufnehmer (5) mit seitlichem Spiel erstreckt.

4. Waage nach Anspruch 3, **dadurch gekennzeichnet, daß** die den Ankopplungsbereich (58) bildenden Enden der beiden Schenkel (56, 56') in der Form von sich entgegengesetzt zur Schwerkraftrichtung erstreckenden Aufnahmegabeln (60, 60') für das in der Schwerkraftrichtung aufzulegende Kalibriergewicht (59) ausgebildet sind.

5. Waage nach einem der Ansprüche 3 oder 4, **dadurch gekennzeichnet, daß** die beiden Schenkel (56, 56') im Bereich ihrer den Ankopplungsbereich (58) bildenden Enden durch eine sich quer zur Parallelogrammebene erstreckende Strebe (57) miteinander verbunden sind.

6. Waage nach einem der Ansprüche 1 bis 5, **dadurch gekennzeichnet, daß** der Kraftwandler (43) in einem zwischen der dem feststehenden Teil (6) abgewandten Seite (4') des Lastaufnehmers (5) und dem Ankopplungsbereich des Kalibriergewichts begrenzten Raum angeordnet ist.

7. Waage nach einem der Ansprüche 1 bis 6, **dadurch gekennzeichnet, daß** der ausgangsseitige Hebelarm (17') der ersten Hebels (18) sich von der Abstützstelle (23) in Richtung auf den feststehenden Teil (6) erstreckt.

8. Waage nach einem der Ansprüche 1 bis 7, **dadurch gekennzeichnet, daß** die Abstützstelle für den zweiten Hebel (30) an dem zum Lastaufnehmer (5) weisenden Bereich (19) des feststehenden Teils (6) gelagert ist und der zweite Hebel (30) einen in Richtung auf den Lastaufnehmer (5) sich erstreckenden Bereich (42) aufweist, der zur Weiterleitung der Gewichtskraft an den Kraftwandler (43) dient, wobei dieser Bereich (42) eine sich bis zu dem Kraftwandler (43) erstreckende Fortsetzung aufweist.

9. Waage nach einem der Ansprüche 6 bis 8, **dadurch gekennzeichnet, daß** der Kraftwandler (43) an zwei sich quer zur Parallelogrammebene in einem Abstand gegenüberliegenden Streben (44, 44') abgestützt ist, die sich mit seitlichem Spiel an dem Lastaufnehmer (5) vorbei erstrecken und an einem zum Lastaufnehmer (5) weisenden Bereich (19) des feststehenden Teils (6) festgelegt sind.

10. Waage nach Anspruch 8 oder 9, **dadurch gekennzeichnet, daß** die Fortsetzung des zweiten Hebels (30) durch zwei sich quer zur Parallelogrammebene in einem Abstand gegenüberliegende und an dem sich in Richtung auf den Lastaufnehmer (5) erstreckenden Bereich (42) des zweiten Hebels (30) festgelegte Verlängerungsschenkel (48, 48') gebildet ist, zwischen denen sich der Lastaufnehmer (5) mit seitlichem Spiel erstreckt.

11. Waage nach Anspruch 10, **dadurch gekennzeichnet, daß** der Kraftwandler (43) ein elektromagnetisches Kraftkompensationssystem ist, dessen Lastkompensationsspule an den dem Kraftwandler (43) zugewandten Enden (52, 52') der Verlängerungsschenkel (48, 48') angeordnet ist.

12. Waage nach einem der Ansprüche 1 bis 11, **dadurch gekennzeichnet, daß** der Lastaufnehmer (5), die Lenker (7, 7'), der feststehende Teil (6) und die Hebel (18, 30) als einstückig zusammenhängende, durch materialfreie Bereiche gegeneinander abgegrenzte Materialbereiche eines Materialblocks (1) ausgebildet sind.

13. Waage nach Anspruch 12, **dadurch gekennzeichnet, daß** die materialfreien Bereiche zumindest teilweise nur durch den Materialblock (1) quer zur Parallelogrammebene durchsetzende dünne Schnittlinien (8, 8', 13, 13', 20, 21, 22, 25, 31, 34) gebildet sind.

14. Waage nach einem der Ansprüche 1 bis 13, **dadurch gekennzeichnet, daß** eine dem Ankopplungsbereich (58) für das Kalibriergewicht (59) zugeordnete Hebevorrichtung (64) vorgesehen ist, durch die das Kalibriergewicht (59) zwischen einer Kalibrierbetriebsstellung, in der es an dem Ankopplungsbereich (58) abgestützt ist, und einer Ruhestellung, in der es von dem Ankopplungsbereich (58) abgehoben ist, verlagerbar ist.

15. Waage nach Anspruch 14, **dadurch gekennzeichnet, daß** das Kalibriergewicht (59) im wesentlichen die Form eines langgestreckten Zylinders mit sich quer zur Schwerkraftrichtung erstreckender Zylinderlängsachse aufweist, der durch die Hebevorrichtung (64) gegen Verdrehung um die Längsachse gesichert ist.

16. Waage nach Anspruch 15, **dadurch gekennzeichnet, daß** in der zylindrischen Mantelfläche (110) des Kalibriergewichts (59) ein ebener Flächenbereich (111, 111') ausgebildet ist, an dem es auf drei Abstützstellen (114, 115, 116) eines seiner Verlagerung zwischen seiner Ruhestellung und seiner Kalibrierbetriebsstellung dienenden Hebeteils (112, 112') der Hebevorrichtung (64) drehfest aufliegt.

## Claims

1. A balance with a load receiving unit (5) that serves for transmitting the weight of a load to be weighed and is guided by two guide members (7, 7') that are spaced apart and extend parallel to one another, wherein each guide member is connected to the load receiving unit (5) with one end (10, 11) and to a stationary part (6) of the balance with the opposite end (9, 12), and wherein the guide members guide the load receiving unit on the stationary part (6) of the balance such that it is able to carry out parallel excursions in the plane of a parallelogram defined by the four ends (9, 10, 11, 12) of the guide members (7, 7'), with a transducer (43) that serves for converting the weight into an electric measuring signal, and with a lever mechanism that contains a first and a second lever (18, 30), as well as a coupling region (58) that serves for producing a separable connection with a calibration weight (59), and serves for transmitting the weight from the load receiving unit (5) to the transducer (43), wherein the first lever (18) of said lever mechanism contains a lever arm (17) on the input side that extends from a coupling point (14) that is arranged on a region (16) of the load receiving unit (5) facing the stationary part (6) and serves for producing a force-transmitting connection with the load receiving unit (5) to a first supporting point (23) that serves as the fulcrum and is arranged on a region (19) of the stationary part (6) that faces the load receiving unit (5), wherein the first lever of the lever mechanism also contains a lever arm (17') on the output side, and wherein the second lever (30) of the lever mechanism is supported on a second supporting point (35) that serves as the fulcrum and coupled to the lever arm (17') on the output side of the first lever (18) in a force-transmitting fashion, **characterized in that** the lever arm (17) on the input side of the first lever (18) contains an extension that extends beyond the coupling point (14) as far as the space situated adjacent to the side (4') of the load receiving unit (5) that points away from the stationary part (6), and **in that** this lever arm is provided with the coupling region (58) for the calibration weight (59) at this location.

2. The balance according to Claim 1, **characterized in that** the coupling region (58) for the calibration weight (59) contains a guide (61) that serves for adjusting the position of the calibration weight on the extension, wherein the calibration weight (59) is transferred into its nominal position under the influence of the gravitational force.

3. The balance according to Claim 1 or 2, **characterized in that** the extension of the lever arm (17) on the input side of the first lever (18) is formed by two limbs (56, 56') that are spaced apart and lie opposite of one another transverse to the parallelogram plane, wherein the ends of said limbs that face the stationary part (6) are rigidly connected to the first lever (18) and their opposite ends contain the coupling region (58) for the calibration weight (59), and wherein the load receiving unit (5) extends between said limbs with a lateral play.

4. The balance according to Claim 3, **characterized in that** the ends of the two limbs (56, 56') that form the coupling region (58) are realized in the form of receptacle forks (60, 60') that extend opposite to the gravitational force and serve for accommodating the calibration weight (59) to be placed thereon in the direction of the gravitational force.

5. The balance according to Claim 3 or 4, **characterized in that** the two limbs (56, 56') are interconnected in the region of their ends that form the coupling region (58), namely by means of a brace (57) that extends transverse to the parallelogram plane.

6. The balance according to one of Claims 1-5, **characterized in that** the transducer (43) is arranged in a space limited between the side (4') of the load receiving unit (5) that points away from the stationary part (6) and the coupling region for the calibration weight.

7. The balance according to one of Claims 1-6, **characterized in that** the lever arm (17') on the output side of the first lever (18) extends from the supporting point (23) in the direction of the stationary part (6).

8. The balance according to one of Claims 1-7, **characterized in that** the supporting point for the second lever (30) is arranged on the region (19) of the stationary part (6) that faces the load receiving unit (5), wherein the second lever (30) contains a region (42) that extends in the direction of the load receiving unit (5) and serves for transmitting the weight to the transducer (43), and wherein said region (42) contains an extension that extends as far as the transducer (43).

9. The balance according to one of Claims 6-8, **characterized in that** the transducer (43) is supported on two braces (44, 44') that are spaced apart and lie opposite of one another transverse to the parallelogram plane, wherein said braces extend past the load receiving unit (5) with a lateral play and are fixed on a region (19) of the stationary part (6) that faces the load receiving unit (5).

10. The balance according to Claim 8 or 9, **characterized in that** the extension of the second lever (30) is formed by two extension limbs (48, 48') that are spaced apart and lie opposite of one another transverse to the parallelogram plane, wherein said extension limbs are fixed on the region (42) of the second lever (30) that extends in the direction of the load receiving unit (5), and wherein the load receiving unit (5) extends between the extension limbs with a lateral play.

11. The balance according to Claim 10, **characterized in that** the transducer (43) consists of an electromagnetic load compensation system, the load compensation coil of which is arranged on the ends (52, 52') of the extension limbs (48, 48') that face the transducer (43).

12. The balance according to one of Claims 1-11, **characterized in that** the load receiving unit (5), the guide members (7, 7'), the stationary part (6) and the levers (18, 30) are realized in the form of integrally interconnected material regions of a material block (1) that are limited relative to one another by machined regions.

13. The balance according to Claim 12, **characterized in that** the machined regions are at least partially formed by thin cuts (8, 8', 13, 13', 20, 21, 22, 25, 31, 34) that extend through the material block (1) transverse to the parallelogram plane.

14. The balance according to one of Claims 1-13, **characterized in that** a lifting device (64) is assigned to the coupling region (58) for the calibration weight (59), wherein said lifting device makes it possible to transfer the calibration weight (59) between a calibrating position, in which it is supported on the coupling region (58), and an idle position, in which it is lifted off the coupling region (58).

15. The balance according to Claim 14, **characterized in that** the calibration weight (59) essentially has the shape of an elongated cylinder with a longitudinal cylinder axis that extends transverse to the direction of the gravitational force, wherein the lifting device (64) prevents said cylinder from turning about the longitudinal axis.

16. The balance according to Claim 15, **characterized in that** the cylindrical outside surface (110) of the calibration weight (59) contains a flat surface region (111, 111') that lies in a rotationally fixed fashion on three supporting points (114, 115, 116) of a lifting part (112, 112') of the lifting device (64) that serves for transferring the calibration weight between its idle position and its calibrating position.

## Revendications

1. Balance comprenant un récepteur de charge (5) servant à l'application de la force de poids d'une charge à peser, qui est guidé de façon parallèle et en pouvant dévier sur la partie (6) fixe de la balance dans le plan d'un parallélogramme défini par les quatre extrémités (9, 10, 11, 12) des tiges directrices (7, 7') par deux tiges directrices (7, 7') s'étendant à distance et parallèlement l'une par rapport à l'autre, dont chacune est reliée sur une extrémité (10, 11) au récepteur de charge (5) et sur une autre extrémité (9, 12) opposée à la première à une partie (6) fixe de la balance, comprenant un convertisseur de force (43) servant à la conversion de la force de poids en un signal de mesure électrique, et un système de levier présentant un premier et un second leviers (18, 30) ainsi qu'une zone de couplage (58) servant à la liaison amovible avec un poids de calibrage (59), servant à la transmission de la force de poids du récepteur de charge (5) au convertisseur de force (43), dont le premier levier (18) présente un bras de levier (17) côté entrée s'étendant d'un point de couplage (14) conçu sur une zone (16), dirigée vers la partie (6) fixe, du récepteur de charge (5), servant à la liaison par force avec le récepteur de charge (5) à un premier point d'appui (23) conçu sur une zone (19), dirigée vers le récepteur de charge (5), de la partie (6) fixe et servant de point de rotation de levier, et un bras de levier (17') côté sortie, et dont le second (30) levier est logé sur un second point d'appui (35) servant de point de rotation de levier et couplé au niveau de la force avec le bras de levier (17') côté sortie du premier levier (18), **caractérisée en ce que** le bras de levier (17) côté entrée du premier levier (18) présente un prolongement qui s'étend au-delà du point de couplage (14) jusque dans la zone contiguë au côté (4'), opposé à la partie (6) fixe, du récepteur de charge (5) est pourvu à cet endroit de la zone de couplage (58) pour le poids de calibrage (59).

2. Balance selon la revendication 1, **caractérisée en ce que** la zone de couplage (58) pour le poids de calibrage (59) présente un guide (61) servant à son réglage de position sur le prolongement, sur lequel le poids de calibrage (59) peut être transféré dans sa position théorique sous l'influence de la force de gravité.

3. Balance selon la revendication 1 ou 2, **caractérisée en ce que** le prolongement du bras de levier (17) côté entrée du premier levier (18) est formé par deux branches (56, 56') se faisant face à distance transversalement au plan du parallélogramme, branches dont les extrémités, dirigées vers la partie (6) fixe, sont reliées de façon fixe au premier levier (18), sur les extrémités opposées desquelles est conçue la zone de couplage (58) pour le poids de calibrage (59) et entre lesquelles s'étend le récepteur de charge (5) avec du jeu latéral.

4. Balance selon la revendication 3, **caractérisée en ce que** les extrémités, formant la zone de couplage (58), des deux branches (56, 56') sont conçues sous la forme de fourches de réception (60, 60') s'étendant de façon opposée au sens de la force de gravité pour le poids de calibrage (59) à poser dans le sens de la force de gravité.

5. Balance selon l'une quelconque des revendications 3 ou 4, **caractérisée en ce que** les deux branches (56, 56') sont reliées entre elles dans la zone de leurs extrémités formant la zone de couplage (58) par une entretoise (57) s'étendant transversalement au plan du parallélogramme.

6. Balance selon l'une quelconque des revendications 1 à 5, **caractérisée en ce que** le convertisseur de force (43) est disposé dans un espace délimité entre le côté (4'), opposé à la partie (6) fixe, du récepteur de charge (5) et la zone de couplage du poids de calibrage.

7. Balance selon l'une quelconque des revendications 1 à 6, **caractérisée en ce que** le bras de levier (17') côté sortie du premier levier (18) s'étend du point d'appui (23) en direction de la partie (6) fixe.

8. Balance selon l'une quelconque des revendications 1 à 7, **caractérisée en ce que** la zone d'appui pour le second levier (30) est logée sur la zone (19), dirigée vers le récepteur de charge (5), de la partie (6) fixe, et le second levier (30) présente une zone (42) s'étendant en direction du récepteur de charge (5), qui sert à la transmission de la force de gravité au convertisseur de force (43), cette zone (42) présentant un prolongement s'étendant jusqu'au convertisseur de force (43).

9. Balance selon l'une quelconque des revendications 6 à 8, **caractérisée en ce que** le convertisseur de force (43) est soutenu sur deux entretoises (44, 44') se faisant face à distance transversalement au plan de parallélogramme, qui s'étendent en passant avec du jeu latéral devant le récepteur de charge (5) et sont fixées sur une zone (19) dirigée vers le récepteur de charge (5), de la partie (6) fixe.

10. Balance selon la revendication 8 ou 9, **caractérisée en ce que** le prolongement du second levier (30) est formé par deux branches de prolongement (48, 48') se faisant face à distance transversalement au plan de parallélogramme et fixées sur la zone (42), s'étendant en direction du récepteur de charge (5), du second levier (30), branches entre lesquelles s'étend le récepteur de charge (5) avec du jeu latéral.

11. Balance selon la revendication 10, **caractérisée en ce que** le convertisseur de force (43) est un système électromagnétique de compensation de force, dont la bobine de compensation de force est disposée sur les extrémités (52, 52'), tournées vers le convertisseur de force (43), des branches de prolongement (48, 48').

12. Balance selon l'une quelconque des revendications 1 à 11, **caractérisée en ce que** le récepteur de charge (5), les tiges directrices (7, 7'), la partie (6) fixe et les leviers (18, 30) sont conçus comme des zones de matériau continues d'une seule pièce, délimitées les unes des autres par des zones sans matériau, d'un bloc de matériau (1).

13. Balance selon la revendication 12, **caractérisée en ce que** les zones sans matériau sont formées au moins partiellement seulement par des lignes de coupe (8, 8', 13, 13', 20, 21, 22, 25, 31, 34) minces et traversant le bloc de matériau (1) transversalement au plan du parallélogramme.

14. Balance selon l'une quelconque des revendications 1 à 13, **caractérisée en ce qu'**il est prévu un dispositif de levage (64) attribué à la zone de couplage (58) pour le poids de calibrage (59), par lequel le poids de calibrage (59) peut être déplacé entre une position de service de calibrage, dans laquelle il est soutenu sur la zone de couplage (58), et une position de repos dans laquelle il est soulevé de la zone de couplage (58).

15. Balance selon la revendication 14, **caractérisée en ce que** le poids de calibrage (59) présente sensiblement la forme d'un cylindre étiré en long avec un axe longitudinal cylindrique s'étendant transversalement au sens de la force de gravité, cylindre qui est bloqué par le dispositif de levage (64) contre la torsion autour de l'axe longitudinal.

16. Balance selon la revendication 15, **caractérisée en ce que** dans la surface d'enveloppe (110) cylindrique du poids de calibrage (59) est conçue une zone de surface (111, 111') plane, sur laquelle le poids se repose de façon solidaire en rotation sur trois points d'appui (114, 115, 116) d'une partie de levier (112, 112'), servant à son déplacement entre sa position de repos et sa position de service de calibrage, du dispositif de levage (64).
